Europäisches Patentamt

European Patent Office

Office européen des brevets

(19)

(11) Veröffentlichungsnummer : **0 090 201**
**B1**

(12) **EUROPÄISCHE PATENTSCHRIFT**

(45) Veröffentlichungstag der Patentschrift :
28.05.86

(21) Anmeldenummer : 83102189.4

(22) Anmeldetag : 05.03.83

(51) Int. Cl.⁴ : **B 23 D 33/04**

(54) Maschine zur Bearbeitung von flachen Werkstücken durch Schneiden.

(30) Priorität : 26.03.82 DE 3211224

(43) Veröffentlichungstag der Anmeldung :
05.10.83 Patentblatt 83/40

(45) Bekanntmachung des Hinweises auf die Patenterteilung : 28.05.86 Patentblatt 86/22

(84) Benannte Vertragsstaaten :
CH DE FR GB IT LI

(56) Entgegenhaltungen :
DE-A- 2 717 508
US-A- 4 157 140

(73) Patentinhaber : C. Behrens AG
Hackelmasch 1
D-3220 Alfeld, Leine (DE)

(72) Erfinder : Bredow, Walter
Ziegelmasch 16A
D-3220 Alfeld, Leine (DE)
Erfinder : Otto, Gerhard
Anemonenweg 1
D-3220 Alfeld, Leine (DE)

(74) Vertreter : Röse, Horst, Dipl.-Ing. et al
Patentanwälte Dipl.-Inge. Röse, Kosel & Sobisch
Odastrasse 4a Postfach 129
D-3353 Bad Gandersheim 1 (DE)

## Beschreibung

Die Erfindung bezieht sich auf eine Maschine zur Bearbeitung von flachen Werkstücken mit runder, insbesondere kreisförmiger, Außenkontur durch Schneiden, mit einem das Werkstück in der x- und y-Richtung verfahrenden, gesteuerten Koordinatentisch und einer im wesentlichen in der z-Richtung wirkenden Schneideinrichtung, insbesondere einer Laserschneideinrichtung, sowie mit Spannvorrichtungen zur lösbaren Halterung des Werkstücks am Koordinatentisch.

Bei Bearbeitungsmaschinen, z. B. Revolverschneidpressen, mit Koordinatentisch, der in der Regel NC- oder CNC-gesteuert ist, bzw. bei Maschinen mit Laserschneidanlagen mit einem solchen Koordinatentisch sowie auch bei Revolverschneidpressen, die mit einer Laserschneideinrichtung kombiniert und mit einem solchen Koordinatentisch ausgestattet sind, ist das flache, insbesondere blechförmige Ausgangsmaterial im allgemeinen rechteckig. Für derartige rechteckige Werkstücke und Zuschnitte sind die Anschläge und Spannelemente der üblichen Koordinatentische ausgebildet. In der Praxis ist es nun in besonderen Anwendungsfällen erforderlich, flache Werkstücke mit runder, insbesondere kreisförmiger, Außenkontur, nämlich sogenannte Ronden, einzuspannen und auf der Maschine weiter zu verarbeiten. Zum Beispiel ist dies im allgemeinen bei der Fertigung von Kreissägeblättern der Fall. Bisher wurden bei der Fertigung von Kreissägeblättern die gehärteten Ronden zu Paketen zusammengespannt und die Verzahnung durch Schleifen auf Spezialschleifmaschinen gefertigt. Es hat sich nun gezeigt, daß die Verzahnung durch Laserschneiden wirtschaftlicher hergestellt werden kann. Es ist zwar von der Lasertechnik her die Fertigung derartiger Kreissägeblätter auf Laserschneidanlagen oder Maschinen entsprechender Art ohne weiteres möglich, jedoch bereitete besondere Schwierigkeiten bisher das Spannen der Ronden am Koordinatentisch. Die Ronden werden, um das Ausgangsmaterial möglichst weitgehend ausnutzen zu können, nur mit einem geringen Übermaß gegenüber dem fertigen Sägeblatt zugeschnitten, so daß der verbleibende Rand als Spannstreifen normalerweise nicht ausreicht. Dies bedeutet, daß bei der Bearbeitung das Sägeblatt gedreht werden muß, nachdem etwa die Hälfte der Verzahnung hergestellt ist. Diese Anordnung und Arbeitsweise ist zum einen sehr zeitaufwendig, zum anderen besteht die große Gefahr, daß beim Drehen der Ronden der Mittelpunkt verloren geht und somit kein einwandfreier Rundlauf der Verzahnung erreicht werden kann.

Ausgehend von einer Maschine der eingangs angegebenen Art, wobei die Bezeichnung der Koordinaten mit « x-, y-und z-Richtung » entsprechend der DIN 66 217 erfolgt, liegt der Erfindung die Aufgabe zugrunde, durch besondere Anordnung und Ausgestaltung der Spannvorrichtungen für das Werkstück die geschilderten Schwierigkeiten zu vermeiden und ein für die exakte Bearbeitung auch runder und insbesondere kreisförmiger flacher Werkstücke geeignetes Aufspannen des Werkstücks am Koordinatentisch zu ermöglichen. Dabei soll die Gestaltung der Spannvorrichtungen und deren Anordnung derart einfach und für die Bearbeitung günstig sein, daß einerseits eine schnelle Ausrüstung der Maschine mit den erforderlichen Spannvorrichtungen ermöglicht wird und zum anderen eine Einbeziehung der jeweiligen Spannvorgänge in den übrigen Steuerungsablauf der Maschine.

Dies wird nach der Erfindung vor allem dadurch erreicht, daß an der sich in x-Richtung erstreckenden Spannschiene des Koordinatentisches eine auf die durch den Mittelpunkt des Werkstücks verlaufende Symmetrieachse ausgerichtete mittlere Spannvorrichtung mit entlang der Symmetrieachse verschiebbaren Spannelementen befestigbar ist und beidseitig dieser mittleren Spannvorrichtung jeweils eine seitliche Spannvorrichtung an der Spannschiene verschiebbar angeordnet sind und die Spannelemente jeder seitlichen Spannvorrichtung um wenigstens eine senkrecht zur Werkstückebene (parallel zur z-Achse) verlaufende Schwenkachse an der zugehörigen seitlichen Spannvorrichtung aus einer das Werkstück und den Bewegungsbereich der Schneideinrichtung freigebenden Freigabeposition in eine das Werkstück erfassende Spannposition und umgekehrt schwenkbar gelagert sind. Hierdurch wird erreicht, daß einerseits über die mittlere Spannvorrichtung der Hauptspannvorgang in der Symmetrieachse des Werkstücks ausgeführt werden kann. Mit Hilfe der sowohl verschieblichen als auch verschwenkbaren seitlichen Spannvorrichtungen läßt sich ein rundes und insbesondere ein kreisförmiges Werkstück, also eine Ronde, je nach dem Werkstückdurchmesser und seiner Kontur sicher beidseitig der Spannvorrichtung aufspannen. Beim Ablauf der Schneidarbeiten, also bei der Verschiebung des Werkstücks einschließlich der Spannvorrichtungen über den Koordinatentisch durch den Arbeitsbereich der Schneideinrichtung, kann jeweils eine ausgewählte seitliche Spannvorrichtung vom Werkstück gelöst und aus dem jeweiligen Bewegungsbereich herausgeschwenkt werden, um den jeweiligen Werkstückumfangsbereich für die Schneidarbeit freizulegen, während die beiden übrigen Spannvorrichtungen das Werkstück sicher während der Positionierungsbewegung des Koordinatentisches halten. Somit ist stets in optimaler Ausrichtung des Werkstücks eine exakte Bearbeitung auf dem gesamten Umfang möglich, ohne daß das Werkstück seine ursprüngliche Aufspannlage verändern müßte. Daher wird der Zeitaufwand für die Bearbeitung auf ein Minimum herabgesetzt und zugleich die Gefahr, daß bei der Bearbeitung die exakte Positionierung des Werkstücks und insbesondere seines Mittelpunkts verlorengehen könnte, vollständig beseitigt. Es ist z. B. bei der Fertigung von Kreissägeblättern eine exakte Herstellung der Verzahnung ohne Verlust des einwandfreien Rundlaufs möglich. Die Erfindung kann bei allen Maschinen der eingangs angegebenen Art eingesetzt werden, die Schneidarbeiten mit ihren Schneideinrichtungen durchführen und bei denen das Werkstück mit Hilfe eines Koordinatentisches positioniert wird. Da eine eigene Verstellbewegung des Werkstücks entfällt, können bei exakter Beibehaltung der ursprünglichen Aufspannposition jeder Spannvorgang mit Hilfe der vorhandenen Steuereinrichtungen gesteuert werden.

Eine besonders exakte Einstellung der seitlichen Spannvorrichtungen auf die Kontur des Werkstücks und insbesondere auf Werkstücke sehr unterschiedlicher Durchmesser wird durch die Merkmale des Anspruchs 2 ermöglicht. Die seitlichen Spannvorrichtungen werden zunächst an der Spannschiene in die günstigste Position verschoben. Danach wird entsprechend der Außenkontur des Werkstücks der Spannkopf durch Schwenken um seine erste Schwenkachse und nachfolgende Arretierung in die günstigste Position überführt. Das Wegschwenken und Einschwenken der Spannköpfe während des Arbeitsablaufs erfolgt dann mit Hilfe eines geeigneten, an der Spannvorrichtung vorgesehenen Antriebs durch Verschwenken der Auflage um die zweite Schwenkachse. Hierdurch wird auch eine hohe Anpassungsfähigkeit der seitlichen Spannvorrichtungen und damit der ganzen Maschine an die jeweiligen Werkstücke mit unterschiedlichen Außenkonturen und insbesondere Durchmessern erzielt.

Eine besonders günstige und einfach steuerbare Ausbildung der seitlichen Spannvorrichtungen wird durch die weiteren Merkmale des Anspruchs 3 erzielt. Das Werkstück ruht auf der Auflage und wird über den am Spannkopf vorgesehenen zugehörigen Antrieb über den Klemmhebel zangenartig gespannt. Die Merkmale des Anspruchs 4 ermöglichen eine einfache Anpassung der Auflage an die jeweilige Höhenlage der Unterseite des zu bearbeitenden Werkstücks.

Für eine einfache Ausbildung der mittleren Spannvorrichtung und deren Spannwirkung ist es zweckmäßig, wenn die mittlere Spannvorrichtung gemäß den Merkmalen des Anspruchs 5 in weiterer Ausgestaltung der Erfindung ausgebildet ist. Über den Schieber mit seinen Klemmbacken läßt sich der Spannvorgang mit einfachen Bauteilen schnell, exakt und sicher ausführen und steuern. Für die Spannwirkung und einen einfachen Antrieb mit einfacher Steuerung ist es dabei zweckmäßig, wenn die mittlere Spannvorrichtung entsprechend den Merkmalen des Anspruchs 6 weiter ausgestaltet ist. Eine besonders vorteilhafte Funktion des Spannhebels in Verbindung mit dem Schieber wird durch die weitere Ausgestaltung der Erfindung nach Anspruch 7 erreicht.

Um vor Beginn des Aufspannens des Werkstücks dieses exakt zu zentrieren und diese Zentrierung exakt den Spannvorrichtungen und insbesondere der mittleren Spannvorrichtung zuzuordnen, ist es zweckmäßig, in weiterer Ausgestaltung der Erfindung ein Zentrierglied entsprechend den Merkmalen des Anspruchs 8 vorzusehen.

Weitere Merkmale, Einzelheiten und Vorteile der Erfindung ergeben sich aus den Ansprüchen und aus der nachfolgenden Beschreibung eines Ausführungsbeispiels der Erfindung anhand der Zeichnung. Als Ausführungsbeispiel ist in der Zeichnung eine Bearbeitungsmaschine für flache Werkstücke mit kreisförmiger Außenkontur dargestellt, wobei von der Maschine und den Koordinatentisch nur diejenigen Teile dargestellt bzw. angedeutet sind, die zur Erläuterung der Erfindung beitragen. Die Zeichnung ist weitestgehend schematisch gehalten. Als Schneideinrichtung wird hier eine Laserschneideinrichtung vorausgesetzt. Die dargestellte Maschine dient insbesondere zur Herstellung von Kreissägeblättern. Es zeigen

Figur 1   die Draufsicht auf die zur Erläuterung der Erfindung nötigen Teile der Bearbeitungsmaschine, insbesondere der betroffenen Spannvorrichtungen mit schematischer Wiedergabe der Laserschneideinrichtung, und zwar mit einer Ronde, insbesondere einem Werkstück für die Herstellung eines Kreissägeblatts, mit größtmöglichem Durchmesser,

Figur 2   die Draufsicht nach Fig. 1 beim Aufspannen einer Ronde mit geringstmöglichem Durchmesser,

Figur 3   die mittlere Spannvorrichtung in einer Seitenansicht,

Figur 3a   die Spannvorrichtung nach Fig. 3 in der Draufsicht mit teilweise weggebrochenem Antrieb für den Spannhebel,

Figur 4   eine der seitlichen Spannvorrichtungen in Richtung des Pfeils 11 in Fig. 2 gesehen,

Figur 4a   eine teilweise geschnittene Ansicht des Spannkopfes der seitlichen Spannvorrichtung nach Fig. 4 in Richtung des Pfeils 46 gesehen,

Figur 4b   in der Draufsicht eine Teilansicht der Spannvorrichtung nach Fig. 4, nämlich der Schwenk- und feststellbaren Verbindung zwischen Spannkopf und seiner Auflage,

Figur 5   als Bearbeitungsbeispiel in vergrößertem Maßstab der Schnittverlauf des Laserstrahls, wie er z. B. beim Herstellen eines Kreissägeblatts aus einer Ronde verlaufen könnte.

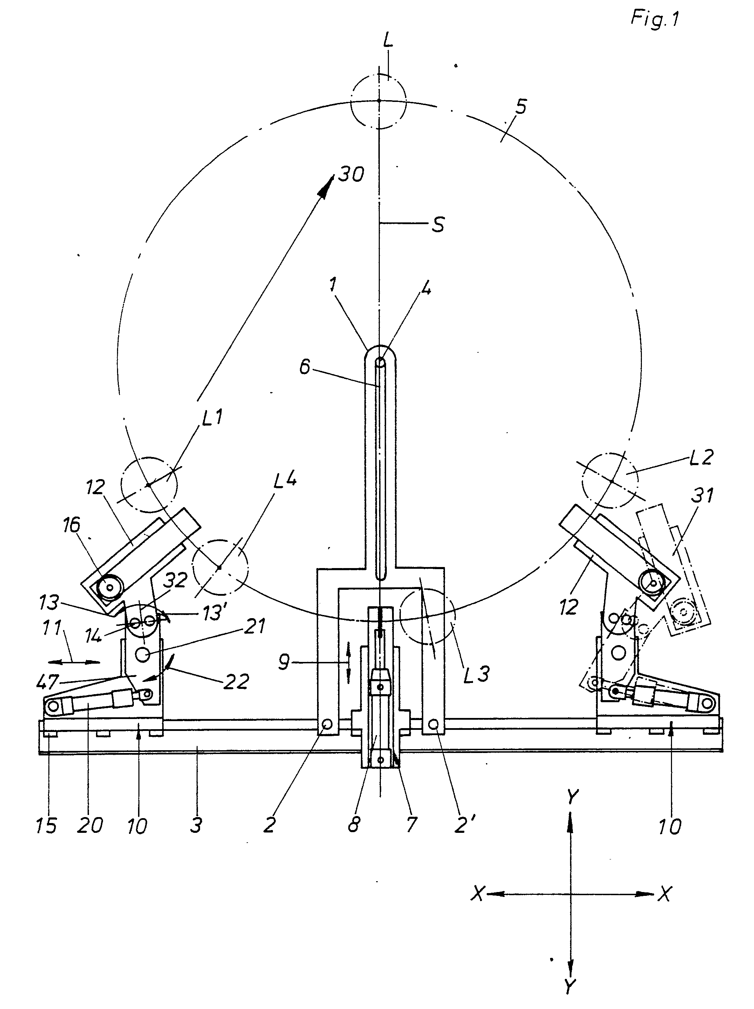

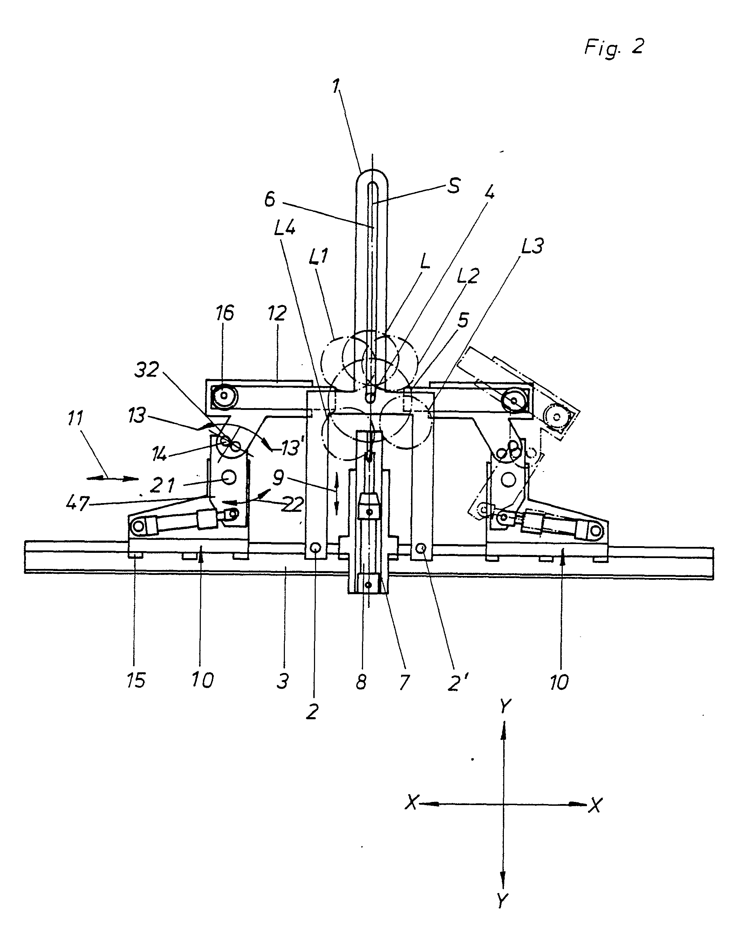

Anhand Fig. 1 und 2 wird zunächst der Grundaufbau der Maschine nach der Erfindung erläutert : An der in x-Richtung verlaufenden Spannschiene 3 des im übrigen nicht weiter dargestellten Koordinatentisches der Maschine ist, z. B. mit Stiften 2 und 2', lösbar ein sich entlang der Symmetrieachse S der einzuspannenden Ronde 5 erstreckendes Zentrierglied 1 gehalten. Mit Hilfe eines Stiftes 4, der durch den Mittelpunkt, nämlich ein vorgesehenes Mittelloch, der Ronde 5 eingeführt wird, wird die Ronde 5 mittig zum Koordinatentisch und damit auch zur Laserschneidanlage L fixiert. Der Stift 4 ist zur Zentrierung in den sich entlang der Symmetrieachse S erstreckenden Schlitz 6 des Zentriergliedes 1 eingeführt. Ein Vergleich von Fig. 1 und Fig. 2 macht deutlich, daß der Schlitz 6 des Zentriergliedes 1 die Benutzung des gleichen Zentriergliedes sowohl für den in Fig. 1 dargestellten maximalen als auch für den in Fig. 2 dargestellten minimalen Rondendurchmesser ermöglicht.

An der Spannschiene 3 des Koordinatentisches ist ferner eine auf die durch den Mittelpunkt der Ronde 5 verlaufende Symmetrieachse S ausgerichtete mittlere Spannvorrichtung mit entlang der Symmetrieachse verschiebbaren Spannelementen lösbar befestigt. Die mittlere Spannvorrichtung ist allgemein mit 7 bezeichnet. Wie im einzelnen noch später beschrieben wird, sind die Spannelemente der mittleren Spannvorrichtung 7 mit Hilfe eines Antriebs, hier eines Druckluftzylinders 8, in Pfeilrichtung 9 entlang der Symmetrieachse S verschiebbar.

Beidseitig dieser mittleren Spannvorrichtung 7 ist in spiegelsymmetrischer Anordnung zur Symmetrieachse S und damit zur mittleren Spannvorrichtung 7 jeweils eine seitliche Spannvorrichtung an der Spannschiene 3 verschiebbar angeordnet. Die seitlichen Spannvorrichtungen sind, abgesehen von ihrer spiegelsymmetrischen Anordnung, in gleicher Weise ausgebildet und allgemein mit 10 bezeichnet. Die seitlichen Spannvorrichtungen 10 können von Hand in Richtung des Pfeils 11 auf der Spannschiene 3 verschoben werden, um deren Anordnung dem Durchmesser der Ronde 5 anzupassen, wie ein Vergleich von Fig. 1 und Fig. 2 zeigt. Wie ebenfalls im folgenden noch näher erläutert wird, sind die an einem Spannkopf 12 vorgesehenen Spannelemente der seitlichen Spannvorrichtungen 10 um eine senkrecht zur Ebene der Ronde 5, also parallel zur z-Achse, verlaufende Schwenkachse 21 an der zugehörigen seitlichen Spannvorrichtung 10 verschwenkbar, und zwar aus einer anhand der rechten Spannvorrichtung 10 mit strichpunktierten Linien dargestellten Freigabeposition 31 in eine mit ausgezogenen Linien dargestellte Spannposition und umgekehrt. Durch den Pfeil 22 sind diese Schwenkbewegungen ersichtlich. Als Antrieb für die Schwenkbewegung ist im Ausführungsbeispiel ein Druckluftzylinder 20 vorgesehen, der an einer Auflage 47 angreift, die auf der Schwenkachse 21 gelagert ist und am anderen Ende den Spannkopf 12 trägt.

Um die Anpassung der seitlichen Spannvorrichtungen 10 an den Rondendurchmesser optimal vorzunehmen, nämlich eine Feineinstellung der Spannposition ausführen zu können, ist der Spannkopf 12 an der Auflage 47 seinerseits um eine zweite Schwenkachse schwenkbar gelagert und in der jeweiligen Schwenklage mit Hilfe von Schrauben 14 feststellbar, wie im einzelnen noch beschrieben wird. Die mögliche Schwenkbewegung des Spannkopfes 12 ist durch den Pfeil 13 bzw. 13' gekennzeichnet. Zur lösbaren Befestigung der Spannvorrichtungen 10 auf der Spannschiene 3 dienen z. B. Spanneisen 15.

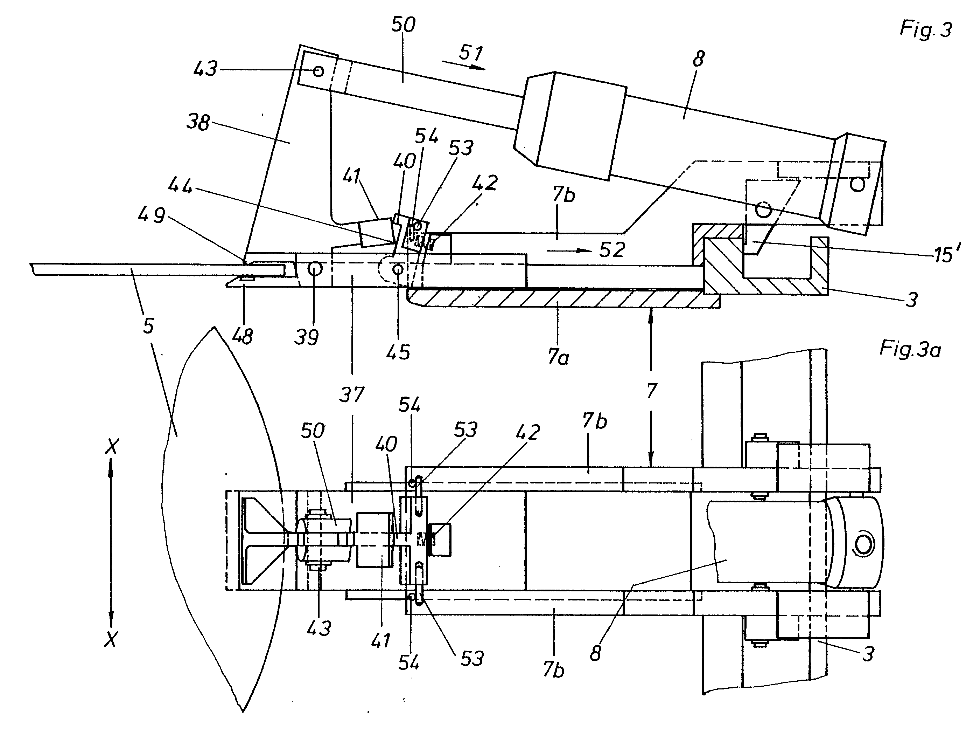

Ein Ausführungsbeispiel für die weitere konstruktive Ausgestaltung der mittleren Spannvorrichtung wird anhand Fig. 3 und 3a beschrieben. Eine Grundplatte 7a mit Seitenwangen 7b der Spannvorrichtung 7 ist mit Spannpratzen 15' an der Spannschiene 3 lösbar befestigt. Die Spannelemente dieser mittleren Spannvorrichtung 7 sind auf einem Schieber 37 angeordnet, der in Richtung der Symmetrieachse S an der Grundplatte 7a verschieblich ist, nämlich geführt in den Seitenwangen 7b. Die Spannelemente sind als zangenförmig wirkende Klemmbacken ausgebildet, und zwar als eine am vorderen Ende des Schiebers 37 ausgebildete Klemmbacke 48 und als eine an einem Spannhebel 38 ausgebildete Klemmbacke 49. Der Spannhebel 38 ist schwenkbar um die Achse 39 am Schieber 37 gelagert und wird für seine Schwenkbewegung angetrieben von dem Druckluftzylinder 8 über die Kolbenstange 50 und die Anlenkstelle 43. An seiner Rückseite weist der Spannhebel 38 eine Nase 41 auf, die mit einer Verriegelungseinrichtung zusammenwirkt. Die Verriegelungseinrichtung beteht aus einer bei 45 schwenkbar im Schieber 37 gelagerten Klinke 40, die in Richtung auf den Spannhebel 38 unter der Wirkung der Feder 42 steht. Seitlich trägt die Klinke Anschlagstifte 53, die mit auf den Seitenwangen 7b der Grundplatte 7a befestigten Anschlagstiften 54 zusammenwirken, wie noch beschrieben wird.

Die Ronde 5 wird mit Hilfe des Druckluftzylinders 8, der seine Kraft über den Bolzen 43 auf den Spannhebel 38 überträgt, gespannt. Durch Verschwenken des Spannhebels 38 um die als Bolzen ausgebildete Achse 39 schließt sich die zwischen den Klemmbacken 48 und 49 gebildete Zange und spannt die Ronde 5 fest. Soll die Ronde 5 wieder freigegeben werden, so wird die Luft im Druckluftzylinder 8 umgesteuert, so daß sich der Spannhebel 38 in umgekehrter Richtung, also in Richtung auf die Spannschiene 3, bewegt, bis sich die Kante 44 der Nase 41 auf den Schieber 37 auflegt. Da zu diesem Zeitpunkt der Kolben des Druckluftzylinders 8 noch nicht seine Endstellung erreicht hat, wird bei weiterer Bewegung der Kolbenstange 50 in Richtung des Pfeils 51 (Freigabebewegung) sich der Schieber 37 in Richtung des Pfeils 52 weiter zurückbewegen, bis die durch die Klemmbacken 48 und 49 gebildete Zange die Ronde 5 ganz freigegeben hat. Bei dieser Verschiebebewegung in Richtung des Pfeils 52 legt sich die Klinke 40 unter dem Einfluß der Feder 42 auf die Nase 41 des Spannhebels 38 auf. Hierdurch wird eine Verriegelung des Spannhebels 38 in der Freigabestellung bewirkt. Dadurch wird beim erneuten Spannen der Ronde 5 der Schieber 37 mit dem Spannhebel 38 in geöffneter Stellung (Freigabestellung) von der Kolbenstange 50 vorgeschoben in Richtung auf die Ronde 5, und zwar so lange, bis die Anschlagstifte 53 der Klinke 40 an den Anschlagstiften 54 der Grundplatte 7a anliegen. Beim weiteren Vorschub des Schiebers 37 in Richtung auf die Ronde 5 gleitet dann die Nase 41 unter der Klinke 40 hervor, so daß der Spannhebel 38 wieder um die Achse 39 verschwenkt wird und sich die Zange aus den Klemmbacken 48 und 49 schließt und die Ronde 5 einspannt.

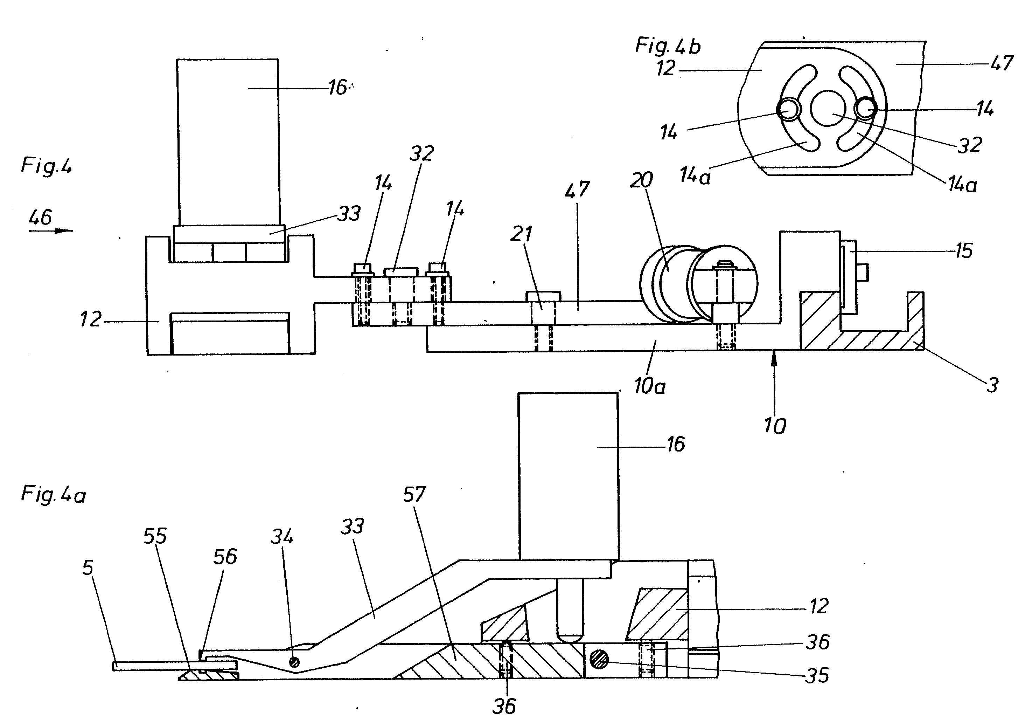

Anhand Fig. 4, 4a und 4b wird ein Ausführungsbeispiel für die konstruktive Ausgestaltung der seitlichen Spannvorrichtungen 10 beschrieben. Es wird erneut bemerkt, daß beide seitliche Spannvorrichtungen 10 konstruktiv in gleicher Weise ausgebildet sind, jedoch spiegelsymmetrisch zur Symmetrieachse S der Maschine und damit zur mittleren Spannvorrichtung 7. Dargestellt und beschrieben ist hier die in Fig. 1 und 2 links gelegene seitliche Spannvorrichtung 10. Eine Grundplatte 10a dieser Spannvorrichtung ist mit Hilfe des Spanneisens 15 an der Spannschiene 3 lösbar, insbesondere verschieblich, befestigt. Auf der Grundplatte 10a ist um eine senkrecht zur Werkstückebene verlaufende Achse 21 eine Auflageplatte 47 schwenkbar gelagert. Zu ihrem Schwenkantrieb dient ein ebenfalls auf der Grundplatte 10a gelagerter Druckluftzylinder 20. An ihrem von der Spannschiene 3 abgewandten freien Ende trägt die Auflageplatte 47 über eine ebenfalls senkrecht zur Werkstückebene verlaufende Schwenkachse 32 schwenkbar einen allgemein mit 12 bezeichneten Spannkopf. Der Spannkopf 12 wird um die Schwenkachse 32 von Hand in seiner Winkelstellung zur Ronde 5 bzw. zur Auflageplatte 47 eingestellt und kann in dieser Winkelstellung festgestellt werden, wie in Fig. 4b als Ausführungsbeispiel dargestellt ist, nämlich mit Hilfe der Schrauben 14, die durch die kreisförmigen Langlöcher 14a des Spannkopfes 12 hindurchgeführt und in die Auflageplatte 47 eingeschraubt sind, wie wiederum Fig. 4 zeigt.

Die Spannelemente jeder Spannvorrichtung 10 sind ebenfalls zangenförmig ausgebildet, und zwar einerseits als ein am Spannkopf 12 gelagertes Auflagestück 57 mit der vorderen Spannstelle 55 und andererseits als ein um die Achse 34 am Auflagestück 57 schwenkbar gelagerter Klemmhebel 33 mit der vorderen Spannstelle 56, der an seinem hinteren freien Ende zu seiner spannenden und freigebenden Schwenkbewegung von einem Druckluftzylinder 16 angetrieben wird. Auch das Auflagestück 57 ist um die parallel zur Werkstückebene verlaufende Achse 35 schwenkbar an dem Spannkopf 12 gelagert, und es kann mit Hilfe der sich am Spannkopf 12 abstützenden Stellschraube 36 am rückwärtigen Ende das Auflagestück 57 derart höhenverstellt werden, daß sich die Höhenlage der Spannstelle 55 ändert.

Mit Hilfe dieser seitlichen Spannvorrichtungen 10 wird die Ronde 5 wie folgt eingespannt : Die Ronde 5 wird durch entsprechende beaufschlagung des Druckluftzylinders 16 und damit des Klemmhebels 33 zwischen den Spannstellen 55 und 56 eingespannt, da der Klemmhebel 33 bei entsprechender Beaufschlagung des Druckluftzylinders 16 um die Achse 34 schwenkt und so die entsprechende Spannkraft auf Ronde 5 und Spannstelle 55 mit Hilfe der Spannstelle 56 ausübt. Ergibt sich, wie noch beschrieben wird, während der Bearbeitung einer eingespannten Ronde, daß die seitliche Spannvorrichtung 10 den Arbeitsfluß behindert, wird zunächst der Druckluftzylinder 16 drucklos gemacht, so daß an den Spannstellen 55 und 56 die Ronde 5 freigegeben wird. Anschließend wird dann durch entsprechende Beaufschlagung des Druckluftzylinders 20 die Auflageplatte 47 um ihre Achse 21 in Richtung des Pfeils 13 in Fig. 1 und 2 verschwenkt und dadurch der Spannkopf 12 aus dem Bereich der Rondenkante herausgeschwenkt, wie es die Stellung 31 in Fig. 1 anhand der rechts gelegenen Spannvorrichtung 10 zeigt.

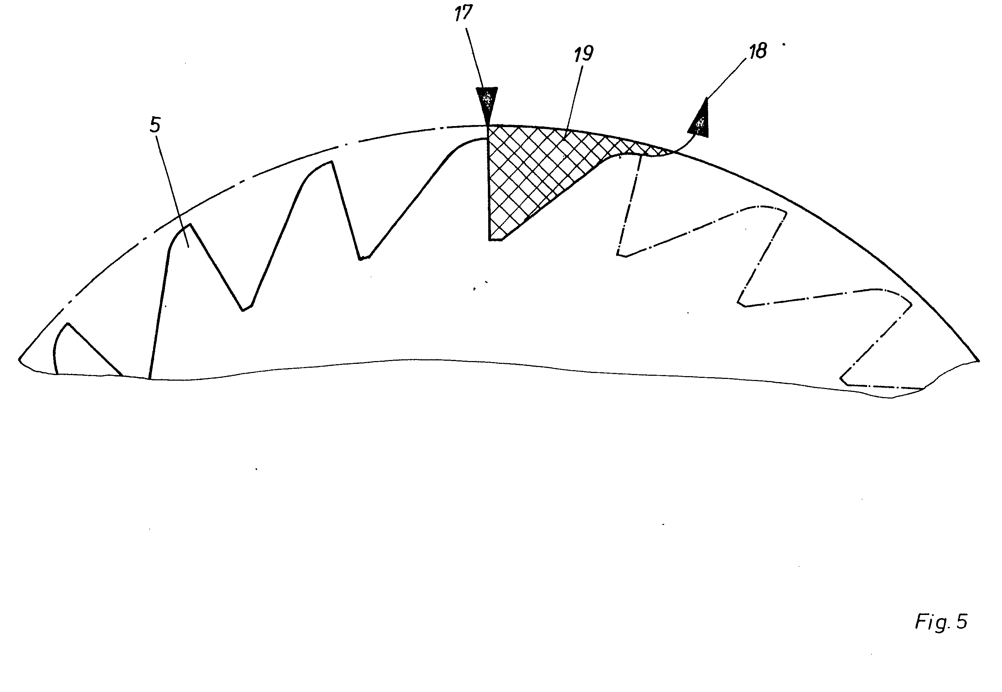

Sind in der oben geschilderten Weise die Einstellarbeiten an der mittleren Spannvorrichtung 7 und den beiden seitlichen Spannvorrichtungen 10 abgeschlossen und ist somit die erste Ronde 5 gespannt, so wird zunächst das Zentrierglied 1 von der Spannschiene 3 abgenommen. Der Koordinatentisch wird mit dieser Einspannung so unter die hier nicht näher dargestellte Laserschneideinrichtung L positioniert (in Richtung des Pfeils 30 in Fig. 1, bis die Arbeitsstelle L1 mit der bei L dargestellten Lage zusammenfällt. An dieser Arbeitsstelle L1 wird mit dem Schneiden der Ronde 5 begonnen, wie es z. B. in Fig. 5 dargestellt ist.

Dort wird z. B. beim Punkt 17 der Laserstrahl in den Werkstoff der Ronde 5 eintreten und es bei 18 wieder verlassen, so daß das Abfallstück 19 abgetrennt und abgeführt werden kann. Als Beispiel ist in Fig. 5 dargestellt, daß dieses Abfallstück 19 nur eine Zahnlücke umfaßt. Es könne jedoch je nach Zweckmäßigkeit auch mehrere Zahnlücken erfaßt werden, die nacheinander geschnitten und deren Abfallmaterial dann gemeinsam abgeführt wird. Dieser Schneidvorgang wiederholt sich ununterbrochen, bis durch die Bewegung des Koordinatentisches die Arbeitsstelle L2 erreicht ist. An dieser Stelle wird das Positionieren des Koordinatentisches unterbrochen. Mit Hilfe einer entsprechenden, in der Maschinen vorgesehenen Hilfsfunktion wird an der in Fig. 1 rechts gelegenen seitlichen Spannvorrichtung 10 die geschilderte Einspannung der Ronde 5 über den Druckluftzylinder 16 gelöst und durch Beaufschlagen des Druckluftzylinders 20 die Auflageplatte 47 mit dem Spannkopf 12 um die Achse 21 in Richtung des Pfeils 22 unter Beibehaltung der Einstellung des Spannkopfes 12 gegenüber der Auflageplatte 47 verschwenkt, und zwar in die strichpunktiert dargestellte Freigabeposition 31. Zu dieser Zeit wird die Ronde 5 nur von der mittleren Spannvorrichtung 7 und der in Fig. 1 links angeordneten seitlichen Spannvorrichtung 10 gehalten. Ferner wird die Ronde 5 stets an der Arbeitsstelle L von unten durch geeignete nicht dargestellte Auflageflächen unterstützt. Nach dem Wegschwenken des Spannkopfes 12 der in Fig. 1 rechts gelegenen seitlichen Spannvorrichtung 10 wird die Laserschneideinrichtung L erneut eingeschaltet, und es fährt der Koordinatentisch weiter auf der vorgeschriebenen und gesteuerten Bahn an der Peripherie der Ronde 5 bis zur Arbeitsstelle L3. Hier erfolgt wiederum ein programmierter Stop. Danach wird der in Fig. 1 rechts gelegene Spannkopf 12 wieder in seine ursprüngliche, mit ausgezogenen Linien dargestellte Spannposition geschwenkt, und es wird der Druckluftzylinder 16 wieder entsprechend beaufschlagt, so daß die Ronde 5 wiederum durch beide Spannköpfe 12 bzw. durch beide seitliche Spannvorrichtungen 10 sicher gehalten wird. Ist dies geschehen, so wird der Schieber 37 mit den Spannelementen der mittleren Spannvorrichtung 7 zurückgezogen und der Laserschneidbetrieb wieder aufgenommen, bis die Arbeitsstelle L4 erreicht ist. Sind dann Laserschneideinrichtung L und Koordinatentisch wiederum stillgesetzt, so wird der Schieber 37 der mittleren Spannvorrichtung 7 wieder vorgefahren und die Ronde 5 an dieser Stelle mit Hilfe der beschriebenen Spannelemente gespannt. An der in Fig. 1 links gelegenen seitlichen Spannvorrichtung 10 wird der Druckluftzylinder 16 entspannt und der Spannkopf 12 wie vorher anhand der in Fig. 1 rechts gelegenen Spannvorrichtung 10 in seine Freigabeposition herausgeschwenkt, so daß dann das letzte Stück des Umfangs der Ronde 5 zwischen den Arbeitsstellen L4 und L1 fertig geschnitten werden kann.

In der gleichen Aufspannung kann auch dem Mittelloch des Werkstücks seine endgültige Form durch Laserschneiden oder durch geeignete Werkzeuge gegeben werden, die an der Maschine angeordnet sind. Ebenso können auch andere für die Befestigung oder andere Zwecke erforderliche Durchbrüche mit Hilfe der Laserschneideinrichtung aus dem Werkstück ausgeschnitten werden, z. B. auch eventuell vorgesehene Dehnnuten. Sind solche Arbeiten vorzusehen, so ist die Maschine zweckmäßig als Revolverschneidpresse mit Laserschneideinrichtung ausgebildet. Nachdem der Koordinatentisch in die ursprüngliche Ladeposition zurückgefahren ist, kann das fertige Werkstück, z. B. das Kreissägeblatt, entnommen werden.

**Patentansprüche**

1. Maschine zur Bearbeitung von flachen Werkstücken mit runder, insbesondere kreisförmiger, Außenkontur durch Schneiden, mit einem das Werkstück in der x- und y-Richtung verfahrenden gesteuerten Koordinatentisch und einer im wesentlichen in der z-Richtung wirkenden Schneideinrichtung, insbesondere einer Laserschneideinrichtung, sowie mit Spannvorrichtungen zur lösbaren Halterung des Werkstücks am Koordinatentisch, dadurch gekennzeichnet, daß an der sich in x-Richtung erstreckenden Spannschiene (3) des Koordinatentisches eine auf die durch den Mittelpunkt (4) des Werkstücks (5) verlaufende Symmetrieachse (S) ausgerichtete mittlere Spannvorrichtung (7) mit entlang der Symmetrieachse (S) verschiebbaren Spannelementen befestigbar ist und beidseitig dieser mittleren Spannvorrichtung (7) jeweils eine seitliche Spannvorrichtung (10) an der Spannschiene (3) verschiebbar angeordnet ist und die Spannelemente (12) jeder seitlichen Spannvorrichtung (10) um wenigstens eine senkrecht zur Werkstückebene (parallel zur z-Achse) verlaufende Schwenkachse (21) an der zugehörigen seitlichen Spannvorrichtung (10) aus einer das Werkstück (5) und den Bewegungsbereich der Schneideinrichtung (L) freigebenden Freigabeposition (31) in eine das Werkstück erfassende Spannposition und umgekehrt schwenkbar gelagert sind.

2. Maschine nach Anspruch 1, dadurch gekennzeichnet, daß ein die Spannelemente (33, 57, 55, 56) jeder seitlichen Spannvorrichtung (10) tragender Spannkopf (12) um eine erste Schwenkachse (32) schwenk- und feststellbar (14, 14a) an einer Auflage (47) gelagert und diese Auflage (47) ihrerseits um eine zweite Schwenkachse (21) an dem an der Spannschiene (3) angeordneten Teil (10a) der Spannvorrichtung (10) durch Antrieb (20) schwenkbar gelagert ist.

3. Maschine nach Anspruch 2, dadurch gekennzeichnet, daß die Spannelemente jeder seitlichen Spannvorrichtung (10) als eine am Spannkopf (12) gehaltene Auflage (57) und ein zangenartig mit dieser Auflage zusammenwirkender, an ihr durch Antrieb (16) schwenkbar gelagerter Klemmhebel (33) ausgebildet sind.

4. Maschine nach Anspruch 3, dadurch gekennzeichnet, daß die Auflage (57) zur Höhenverstellung ihrer Klemmstelle (55) um eine parallel zur Werkstückebene verlaufende Achse (35) schwenk- und einstellbar (36) gehalten ist.

5. Maschine nach einem der Ansprüche 1 bis 4, dadurch gekennzeichnet, daß die mittlere Spannvorrichtung (7) einen auf ihrem an der Spannschiene (3) befestigten Teil (7a, 7b) entlang der Symmetrieachse (S) verschieblichen Schieber (37) trägt und an diesem Schieber die als Klemmbacken (48, 49) ausgebildeten Spannelemente für das Werkstück (5) angeordnet sind.

6. Maschine nach Anspruch 5, dadurch gekennzeichnet, daß eine der Klemmbacken als Werkstückauflage (48) am Schieber (37) ausgebildet ist und die zweite Klemmbacke (49) an einem am Schieber um eine parallel zur Werkstückebene (in x-Richtung) verlaufende Achse (39) durch Antrieb (8, 50) schwenkbaren Spannhebel (38) gebildet ist.

7. Maschine nach Anspruch 6, dadurch gekennzeichnet, daß der Spannhebel (38) durch eine am Schieber (37) angeordnete, durch Anschläge (54) am tragenden Teil (7a, 7b) der Spannvorrichtung (7) infolge der Schieberbewegung lösbare Verriegelungseinrichtung (40, 41, 42, 45, 53) in seiner das Werkstück (5) freigebenden Schwenklage arretierbar ist.

8. Maschine nach einem der Ansprüche 1 bis 7, dadurch gekennzeichnet, daß an der Spannschiene (3) des Koordinatentisches ein sich entlang der Symmetrieachse (S) erstreckendes Zentrierglied (1) lösbar gehalten ist, das in einem sich ebenfalls entlang der Symmetrieachse erstreckenden Schlitz (6) einen durch den Mittelpunkt des Werkstücks geführten Zentrierstift (4) aufnimmt.

## Claims

1. Machine for the treatment, by cutting, of flat workpieces which have a rounded, especially circular, outer contour, comprising a coordinate table controlled to displace the workpiece in the x- and y- directions, a cutting device, particularly a laser cutting device, acting substantially in the z-direction, as well as clamping means for releasably holding the workpiece on the coordinate table, characterised in that on the clamping rail (3) of the coordinate table extending in the x-direction there is securable a central clamping device (7) for alignment with the axis of symmetry (S) extending through the centrepoint (4) of the workpiece (5), said clamping device (7) including clamping elements displaceable along the axis of symmetry (S), on each side of the central clamping device (7) there is a lateral clamping device (10) arranged displaceably on the clamping rail (3), and clamping elements (12) of each lateral clamping device (10) are mounted for pivotal movement about at least one pivot axis (21) on the associated lateral clamping device (10) and extending perpendicular to the plane of the workpiece (parallel to the z-axis), the pivotal movement being from a release position (31) in which the workpiece (5) is released and the zone of movement of the cutting device (L) is cleared to a clamping position in which the workpiece is gripped, and vice versa.

2. Machine according to claim 1, characterised in that a clamping head (12) carrying the clamping elements (33, 57, 55, 56) of the respective lateral clamping devices (10) is mounted on a support (47) so as to be pivotable and adjustable (14, 14a) about a first pivot axis (32), and this support (47) for its part is mounted for pivotal movement, controlled by drive means (20), about a second pivot axis (21) on the part (10a) of the clamping device (10) arranged on the clamping rail (3).

3. Machine according to claim 2, characterised in that the clamping elements of each lateral clamping device (10) are formed as a support (57) mounted on the clamping head (12) and a tongs-like clamping lever (33) cooperating with this support and mounted on the latter for pivotal movement controlled by drive means (16).

4. Machine according to claim 3, characterised in that the support (57), for adjusting the height of its clamping point (55), is mounted for adjustment (36) and pivotal movement about an axis (35) extending parallel to the plane of the workpiece.

5. Machine according to one of claims 1 to 4, characterised in that the central clamping device (7) carries a slider (37) which is displaceable along the axis of symmetry (S) on a part (7a, 7b) secured to the clamping rail (3), and the clamping elements for the workpiece (5) are arranged on the slider as clamping jaws (48, 49).

6. Machine according to claim 5, characterised in that one of the clamping jaws is formed on the slider (37) as a workpiece support (48) and the second clamping jaw (49) is formed on a clamping lever (38) which is pivotable on the slider by drive means (8, 50) about an axis (39) which extends parallel to the plane of the workpiece (in the x-direction).

7. Machine according to claim 6, characterised in that the clamping lever (38) can be arrested in its pivoted position in which the workpiece (5) is released by a locking device (40, 41, 42, 45, 53) which is arranged on the slider (37) and which is releasable as a consequence of movement of the slider by stops (54) on the supporting part (7a, 7b) of the clamping device (7).

8. Machine according to one of claims 1 to 7, characterised in that, on the clamping rail (3) of the coordinate table, a centering member (1) is releasably mounted to extend along the axis of symmetry (S), said centering member being provided with a slot (6) likewise extending along the axis of symmetry and in which a centering pin (4) guided by the centrepoint of the workpiece is received.

## Revendications

1. Machine pour l'usinage de pièces plates à contour extérieur arrondi, en particulier circulaire, par découpe, comprenant une table à coordonnées commandée pour déplacer la pièce dans les directions x et y et un dispositif de coupe agissant essentiellement dans la direction z, notamment un dispositif de coupe au laser, ainsi que des dispositifs de fixation assurant le maintien amovible de la pièce d'œuvre par rapport à la table à coordonnées, caractérisée en ce qu'un dispositif de maintien médian (7), dirigé suivant l'axe de symétrie (S) passant par le centre de la pièce (5), peut être fixé sur le rail d'appui (3), s'étendant dans la direction x, de la table à coordonnées ; en ce qu'un dispositif de maintien latéral (10) est disposé de chaque côté de ce dispositif de maintien médian (7), sur le rail d'appui (3) ; et en ce que les éléments de serrage (12) de chaque dispositif de maintien latéral (10) sont montés avec possibilité de pivotement autour d'au moins un axe de pivotement (21) perpendiculaire au plan de la pièce (parallèle à l'axe z) sur le dispositif de maintien latéral (10) correspondant, depuis une position d'ouverture (31) libérant la pièce (5) et le domaine de mouvement du dispositif de coupe (L), jusque dans une position de fermeture saisissant la pièce d'œuvre et inversement.

2. Machine selon la revendication 1, caractérisée en ce qu'une tête de serrage (12), portant les éléments de serrage (33, 57, 55, 56) de chaque dispositif de maintien latéral, est montée sur une pièce d'appui (47) par un premier axe de pivotement (32) de façon à pouvoir tourner et être bloquée (14, 14a) et en ce que cette pièce d'appui (47) est elle-même portée par la partie (10a) du dispositif de maintien (10) attenante au rail d'appui (3) avec possibilité de pivotement autour d'un deuxième axe de pivotement (21) sous l'effet d'un organe d'entraînement (20).

3. Machine selon la revendication 2, caractérisée en ce que les éléments de serrage de chaque dispositif de maintien latéral sont constitués sous forme d'une pièce d'appui (57) maintenue sur la tête de serrage (12) et d'un levier de serrage (33) formant pince, qui coopère avec cette pièce d'appui et repose sur elle avec pivotement provoqué par l'organe d'entraînement (16).

4. Machine selon la revendication 3, caractérisée en ce que la pièce d'appui (57) est montée, pour le déplacement en hauteur de son emplacement de serrage (55) sur un axe (35) parallèle au plan de la pièce, de façon à pouvoir pivoter et être bloquée (36).

5. Machine selon l'une des revendications 1 à 4, caractérisée en ce que le dispositif de maintien médian (7) porte une coulisse (37) mobile le long de l'axe de symétrie (S) sur la partie (7a, 7b) de ce dispositif de maintien qui est fixé au rail d'appui (3), et en ce que cette coulisse porte les éléments de serrage de la pièce (5), constitués sous forme de mâchoires (48, 49).

6. Machine selon la revendication 5, caractérisée en ce qu'une des mâchoires de serrage (48) est constituée comme pièce d'appui de la pièce sur la coulisse (37) et en ce que la deuxième mâchoire de serrage (49) est montée sur la coulisse par un axe (39) parallèle au plan de la pièce (dans la direction x), par l'intermédiaire d'un levier de serrage (38) pourvu de moyens d'actionnement (8, 50).

7. Machine selon la revendication 6, caractérisée en ce que le levier de serrage (38) peut être bloqué dans sa position de pivotement libérant la pièce (5) par un dispositif de verrouillage (40, 41, 42, 45, 53) disposé sur la coulisse (37), et qui peut être débloqué à la suite du mouvement de celle-ci, grâce à des butées (54) prévues sur la partie porteuse (7a, 7b) du dispositif de maintien (7).

8. Machine selon l'une des revendications 1 à 7, caractérisée en ce qu'une glissière de centrage (1) s'étendant le long de l'axe de symétrie (S), est maintenue de façon amovible sur le rail d'appui (3) de la table à coordonnées, et reçoit une cheville (4) de centrage, guidée dans une fente (6) s'étendant également le long de l'axe de symétrie et passant par le centre de la pièce.

Fig.1

Fig. 2

Fig. 3

Fig.3a

0 090 201

Fig. 4b

Fig. 4

Fig. 4a

0 090 201

Fig. 5

0 090 201